(19) **Europäisches Patentamt**

**European Patent Office**

**Office européen des brevets**

(11) **EP 1 592 592 B1**

(12) **EUROPÄISCHE PATENTSCHRIFT**

(45) Veröffentlichungstag und Bekanntmachung des Hinweises auf die Patenterteilung:
**29.11.2006 Patentblatt 2006/48**

(21) Anmeldenummer: **03808283.0**

(22) Anmeldetag: **22.12.2003**

(51) Int Cl.:
***B60T 8/00*** *(2006.01)*     ***B60T 8/24*** *(2006.01)*

(86) Internationale Anmeldenummer:
**PCT/EP2003/014728**

(87) Internationale Veröffentlichungsnummer:
**WO 2004/067343 (12.08.2004 Gazette 2004/33)**

(54) **VERFAHREN ZUR ERHÖHUNG DER FAHRSTABILITÄT EINES FAHRZEUGS**

METHOD FOR INCREASING THE DRIVING STABILITY OF A VEHICLE

PROCEDE D'AUGMENTATION DE LA STABILITE D'UN VEHICULE

(84) Benannte Vertragsstaaten:
**AT BE BG CH CY CZ DE DK EE ES FI FR GB GR HU IE IT LI LU MC NL PT RO SE SI SK TR**

(30) Priorität: **31.01.2003 DE 10303924**

(43) Veröffentlichungstag der Anmeldung:
**09.11.2005 Patentblatt 2005/45**

(73) Patentinhaber: **KNORR-BREMSE SYSTEME FÜR NUTZFAHRZEUGE GMBH
80809 München (DE)**

(72) Erfinder:
• **SCHRAMM, Herbert
71229 Leonberg (DE)**
• **HECKER, Falk
71706 Markgröningen (DE)**
• **HORN, Matthias
70499 Stuttgart (DE)**
• **GÜCKER, Ulrich
71701 Schwieberdingen (DE)**
• **HUMMEL, Stefan
71191 Stuttgart (DE)**

(56) Entgegenhaltungen:
**DE-A- 10 128 692     DE-A- 10 135 020
DE-A- 19 736 328     DE-A- 19 751 935
DE-A- 19 856 303     US-A1- 2001 008 986**

EP 1 592 592 B1

**Beschreibung**

Stand der Technik

Die Erfindung geht aus von einem Verfahren zur Erhöhung der Fahrstabilität eines Fahrzeugs, insbesondere eines Nutzfahrzeugs, welches durch Regeleingriff in ein den Antrieb und/oder die Bremsen des Fahrzeugs betätigendes Regelsystem einer Fahrzeuginstabilität entgegenwirkt, gemäß dem Oberbegriff von Anspruch 1.

Zu den kritischen Situationen bei Nutzfahrzeugen zählen insbesondere das Schleudern, das Einknicken zwischen Motorwagen und Anhänger sowie das Kippen. Aus dem Stand der Technik sind gattungsgemäße Verfahren zur Reduzierung der Kippgefahr bekannt. Beispielsweise soll im Rahmen von sog. Roll Stability Systemen ein Kippen von Nutzfahrzeugen durch gezielte Motormoment- und/oder Bremseingriffe verhindert werden.

Ein gattungsgemäßes Verfahren nach der DE 198 56 303 A1 schlägt vor, während einer Kurvenfahrt die Querbeschleunigung zu messen sowie eine mit der am Schwerpunkt angreifenden Zentrifugalbeschleunigung korrelierende Zustandgröße zu ermitteln und aus der mit einem Faktor gewichteten Differenz zwischen der erfassten Komponente der Querbeschleunigung und der ermittelten Zentrifugalbeschleunigung den Wankwinkel des Fahrzeugs zu berechnen. Demgegenüber gehen variable Fahrzeugkenngrößen wie die aktuelle Schwerpunktlage des Fahrzeugs, die über den aktuellen Beladungszustand zu einer veränderlichen Größen wird, bei der Kippsensierung nicht ein. Neben der momentanen Querbeschleunigung ist für die Kippstabilität jedoch auch die Schwerpunkthöhe wesentlich, insbesondere bei beladbaren und deshalb bezüglich der Schwerpunkthöhe variablen Nutzfahrzeugen. Diese Größe ist jedoch für sich genommen nur mit großem Aufwand zu messen bzw. zu berechnen. Beispielsweise stellt die DE 197 51 935 A1 ein Verfahren zur Ermittlung der Schwerpunkthöhe vor, welches vergleichsweise komplex ist. In der DE 101 35 020 A1 werden Informationen über die Schwerpunkthöhe durch Auswertung der Einfederwege zur Korrektor einer maximalen Querbeschleunigung herangezogen.

Der vorliegenden Erfindung liegt demgegenüber die Aufgabe zugrunde, ein Verfahren der eingangs erwähnten Art derart weiter zu entwickeln, dass es die jeweilige Schwerpunkthöhe der Fahrzeugs berücksichtigt, ohne dass hierzu aufwändige oder teure Sensoren oder Messungen notwendig sind.

Diese Aufgabe wird durch die Merkmale von Anspruch 1 gelöst.

Vorteile der Erfindung

Grundlage der Erfindung ist die Verbesserung von Fahrstabilitätssystemen, insbesondere von Roll Stability Systemen durch Online-Abschätzung oder Online-Bestimmung des Wankverhaltens und/oder der Kippgrenze des Fahrzeugs. Die Abschätzung (Extrapolation) basiert dabei auf dem online ermittelten Systemverhalten zwischen den Fahrzeugbewegungen und dem hieraus resultierenden Wankverhalten des Fahrzeugs. Mit Hilfe der hieraus ertangten Informationen wird die Funktion des Fahrstabilitätssystems dahingehend verändert, dass bei niedrigen Kippgrenzen bzw. ausgeprägtem Wanken ein früherer Stabilitätseingriff und bei höheren Kippgrenzen bzw. geringem Wanken ein späterer Eingriff erfolgt. Damit kann zum einen die Sicherheit bei hohen Schwerpunktlagen erhöht und gleichzeitig die Fahrbarkeit bei niedrigen Schwerpunktlagen verbessert werden.

Ziel der Erfindung ist folglich, Fahrstabilitätssysteme, insbesondere Roll Stability Systeme durch Auswertung der Wankbewegungen bzw. durch Ermittlung der Kippgrenze während einer Kurvenfahrt zu verbessern.

Erfindungsgemäß erfolgt der Regeleingriff des Fahrstabilitätssystems in Abhängigkeit des Verhältnisses zwischen der Schwerpunkthöhe $h$ des Schwerpunkts des Fahrzeugs und einer Federkonstante $c$ der Fahrzeugfederung. Folglich wird der wesentliche Parameter Schwerpunkthöhe $h$ in dem Quotienten $h/c$ direkt berücksichtigt, welcher bei jeder Fahrt einen identifizierbaren Wert bildet. Ist dieser Wert groß, dann wird die zulässige Querbeschleunigung oder Kippgrenze herabgesetzt und umgekehrt. Da der Quotient $h/c$, nicht aber die Schwerpunkthöhe $h$ selbst ermittelt wird, braucht letztere nicht bekannt sein bzw. aufwändig bestimmt werden. Der Quotient $h/c$ kann beispielsweise aus dem Momentengleichgewicht um eine gedachte Rollachse ermittelt werden.

Der Quotient $h/c$ stellt dann eine Regelgröße dar, welche unmittelbar ein Maß für die Kipp- oder Wankneigung eines Fahrzeugs sind. Unter Wanken soll hierbei gemäß der allgemeinen Definition eine Bewegung des Fahrzeugs um die Längsachse verstanden werden.

Durch die in den Unteransprüchen aufgeführten Maßnahmen sind vorteilhafte Weiterbildungen und Verbesserungen der im Patentanspruch 1 angegebenen Erfindung möglich.

Ausführungsbeispiele der Erfindung sind in der nachfolgenden Beschreibung näher erläutert.

Beschreibung der Ausführungsbeispiele

Die Erfindung schlägt ein Verfahren zur Erhöhung der Fahrstabilität eines Fahrzeugs, insbesondere eines Nutzfahrzeugs vor, welches durch Regeleingriff in ein den Antrieb und/oder die Bremsen des Fahrzeugs betätigendes Regelsystem einer Fahrzeuginstabilität entgegenwirkt. Beispielsweise erfolgt der Regeleingriff in Abhängigkeit einer oder mehrerer während der Fahrt ermittelten und für das Wankverhalten und/oder für die Kippgrenze des Fahrzeugs charakteristischen Größen.

Die Ermittlung der Wankbewegungen eines Fahrzeugs, insbesondere eines Nutzfahrzeugs, kann auf unterschiedliche Weise erfolgen, wobei die folgende Aufzählung lediglich beispielhaft und nicht abschließend ist.

Beispielsweise kann die Querbeschleunigung $a_{yFrame}$ am Fahrzeugaufbau gemessen und in Beziehung zu der an einer Achse gemessenen Querbeschleunigung $a_{yAxle}$ gesetzt werden. Folglich wird der Wankwinkel $\varphi$ zwischen einem Aufbau und einer Achse des Fahrzeugs ermittelt. Unter Vernachlässigung der Wankbewegungen der Achse gilt dann :

$$a_{yFrame} = a_{yAxle} \cdot \cos\varphi + g \cdot \sin\varphi \qquad (1)$$

wobei

$a_{yFrame}$     die Querbeschleunigung des Aufbaus,
$a_{yAxle}$     die Querschleunigung der Achse
g     die Erdbeschleunigung ist.

Aus Gleichung (1) ist dann der Wankwinkel $\varphi$ berechenbar, beispielsweise mittels einer in ein Steuergerät des Fahrstabilitätssystems integrierten Berechnungseinheit.

Auch kann der Wankwinkel $\varphi$ aus einer Messung der Relativbewegung zwischen Aufbau und Achse, beispielsweise mittels Wegsensoren einer Luftfederung unter Vernachlässigung der Wankbewegungen der Achse aus folgender Beziehung (2) ermittelt:

$$\sin\varphi \approx \frac{s_{left} - s_{right}}{b} \qquad (2)$$

wobei

$s_{left}$     der Federweg am Federanlenkungspunkt der linken Achsseite,
$s_{right}$     der Federweg am Federanlenkungspunkt der rechten Achsseite,
b     der Abstand der beiden Federanlenkungspunkte ist.

Eine weitere Maßnahme sieht vor, dass der Wankwinkel aus den nachfolgenden Gleichungen (3) und (4) ermittelt wird, in welcher die am Aufbau gemessen Querbeschleunigung zu der aus den Radgeschwindigkeiten und/ oder der Gierrate berechneten Querbeschleunigung in Beziehung gesetzt wird :

$$a_{yFrame} = a_{yCalc} \cdot \cos\varphi + g \cdot \sin\varphi \qquad (3)$$

wobei für die berechnete Querbeschleunigung $a_{yCalc}$ gilt :

$$a_{yCalc} = \omega_z \cdot v = \frac{v_{right} - v_{left}}{b} \cdot v \qquad (4)$$

mit :

$\omega_z$     Gierrate,
v     Fahrzeuggeschwindigkeit,

$v_{right}$    Geschwindigkeit der rechten Fahrzeugseite,
$v_{left}$    Geschwindigkeit der linken Fahrzeugseite
b        Spurweite.

Weiterhin kann der Wankwinkel φ durch Inbeziehungsetzen der Signale eines an einer Fahrzeugachse angeordneten Winkelsensors, der die Richtung der Beschleunigung in einer Ebene angibt, mit den Signalen eines am Aufbau angeordneten, die Querbeschleunigung messenden Beschleunigungssensors ermittelt werden.

Alternativ können die Signale zweier Winkelsensoren ausgewertet werden, von welchen der eine an einer Achse und der andere am Aufbau befestigt ist. Die Differenz beider Signale ist ein Maß für den Wankwinkel φ unter der Annahme einer vernachlässigbar kleinen Wankbewegung der Achse.

Vorzugsweise wird ein den Wankwinkel φ und/oder die Querbeschleunigung $a_y$ und/oder die Gierrate $\omega_z$ des Fahrzeugs enthaltender Kennwert gebildet, in dessen Abhängigkeit der Regeleingriff erfolgt.

Erfindungsgemäß erfolgt der Regeleingriff in Abhängigkeit eines während einer Kurvenfahrt ermittelten Verhältnisses zwischen der Schwerpunkthöhe h des Schwerpunkts des Fahrzeugs und einer Federkonstante c der Fahr-zeugfederung. Vorzugsweise wird das Verhältnis zwischen der Schwerpunkthöhe h und der Federkonstante c aus folgender Gleichung (5) berechnet, welche das Momentengleichgewicht um eine gedachte Rollachse darstellt :

$$\Delta s \cdot c \cdot b = m \cdot a_y \cdot h \qquad (5)$$

wobei

Δs    die Differenz der Einfederwege rechts und links
c      die Federkonstante der Federung,
b      die Spurweite,
m     die Masse des Fahrzeugs,
$a_y$     die Querbeschleunigung,
h      die Schwerpunkthöhe des Fahrzeugschwerpunkts ist.

Die Differenz der Einfederwege Δs und die Querbeschleunigung $a_y$ wird während einer Kurvenfahrt durch Sensoren gemessen. Der Quotient h/c ist dann ein bei jeder Fahrt identifizierbarer Wert. Ist dieser Wert groß, dann wird die zulässige Querbeschleunigung oder Kippgrenze herabgesetzt und umgekehrt.

Da das Wankverhalten nicht nur von der Schwerpunkthöhe abhängt, sondern auch von anderen Faktoren wie beispielsweise der Wanksteifigkeit und der Lage des Wankzentrums und folglich eine absolute Bestimmung der Kippgrenze schwierig ist, werden die ermittelten Parameter vorzugsweise in einem nicht flüchtigen Speicher abgelegt und für verschiedene Zuladungen, insbesondere leer und beladen miteinander verglichen, um eine bessere Klassifizierung der Kippneigung abhängig von der jeweiligen Fahrzeugmasse zu ermöglichen. Mit Hilfe dieser Daten erfolgt der Regeleingriff des Fahrstabilitätssystems genauer, insbesondere werden auch extreme Beladungen berücksichtigt und die Fahrbarkeit im Sinne einer Vermeidung unnötiger Eingriffe bei flach beladenen Fahrzeugen verbessert.

**Patentansprüche**

1.    Verfahren zur Erhöhung der Fahrstabilität eines Fahrzeugs, insbesondere eines Nutzfahrzeugs, welches durch Regeleingriff in ein den Antrieb und/oder die Bremsen des Fahrzeugs betätigendes Regelsystem einer Fahrzeuginstabilität entgegenwirkt, **dadurch gekennzeichnet, dass** der Regeleingriff in Abhängigkeit des Verhältnisses zwischen der Schwerpunkthöhe h des Schwerpunkts des Fahrzeugs und einer Federkonstante c der Fahr-zeugfederung erfolgt.

2.    Verfahren nach Anspruch 1, **dadurch gekennzeichnet, dass** das Verhältnis zwischen der Schwerpunkthöhe h und der Federkonstante c während einer Kurvenfahrt aus folgender Beziehung berechnet wird :

$$\Delta s \cdot c \cdot b = m \cdot a_y \cdot h \, ,$$

wobei

    $\Delta s$ die Differenz der Einfederwege rechts und links
    c die Federkonstante der Federung,
    b die Spurweite,
    m die Masse des Fahrzeugs,
    $a_y$ die Querbeschleunigung,
    h die Schwerpunkthöhe des Fahrzeugschwerpunkts ist.

**3.** Verfahren nach Anspruch 2, **dadurch gekennzeichnet, dass** die Differenz der Einfederwege $\Delta s$ und die Querbeschleunigung $a_y$ während einer Kurvenfahrt des Fahrzeugs durch Sensoren gemessen werden.

**Claims**

**1.** Method of increasing the driving stability of a vehicle, in particular a utility vehicle, which counteracts a vehicle instability by controlling intervention in a control system operating the driving system and/or the brakes of the vehicle, **characterised in that** said control intervention is made as a function of the ratio between the centre-of-gravity level $h$ of the centre of gravity of the vehicle and a spring constant $c$ of the vehicle spring system.

**2.** Method according to Claim 1, **characterised in that** the ratio between the centre-of-gravity level $h$ and the spring constant $c$ is computed, while the vehicle is cornering, by derivation from the following relationship:

$$\Delta s \bullet c \bullet b = m \bullet a_y \bullet h \, ,$$

wherein

    $\Delta s$ is the difference of the spring travels on the right and the left sides,
    $c$ is the spring constant of the spring system,
    $b$ is the track,
    $m$ is the mass of the vehicle,
    $a_y$ is the transverse acceleration,
    $h$ is the centre-of-gravity level of the centre of gravity of the vehicle.

**3.** Method according to Claim 2, **characterised in that** the difference of the spring travels $\Delta s$ and the transverse acceleration $a_y$ is measured by sensors while the vehicle is cornering.

**Revendications**

**1.** Procédé d'augmentation de la stabilité d'un véhicule, en particulier d'un véhicule utilitaire, qui agit en sens contraire à l'instabilité d'un véhicule par intervention de réglage dans un système de commande actionnant le système d'entraînement et/ou les freins du véhicule, **caractérisé en ce que** ladite intervention de réglage se fait en fonction du rapport entre le niveau barycentre $h$ du centre de gravité du véhicule et une constante de flexibilité $c$ du système à ressort du véhicule.

**2.** Procédé selon la revendication 1, **caractérisé en ce que** le rapport entre le niveau barycentre $h$ est la flexibilité du système à ressort $c$ est calculé, au cours de la négociation d'un virage du véhicule, par dérivation de l'équation suivante :

$$\Delta s \bullet c \bullet b = m \bullet a_y \bullet h \, ,$$

dans laquelle :

    $\Delta s$ est la différence entre les déplacements élastiques des ressorts du côté droit et du côté gauche.

*c* est la constante de flexibilité du système à ressort,
*b* est l'écartement des roues,
*m* est la masse du véhicule,
$a_y$ est l'accélération transversale,
*h* est le niveau barycentre du centre de gravité du véhicule.

3. Procédé selon la revendication 2, **caractérisé en ce que** la différence entre les déplacements élastiques des ressorts $\Delta s$ et l'accélération transversale $a_y$ est mesurée moyennant des détecteurs au cours de la négociation d'un virage du véhicule.